(19) Europäisches Patentamt
European Patent Office
Office européen des brevets

(11) Publication number : **0 506 611 A2**

(12) # EUROPEAN PATENT APPLICATION

(21) Application number : **92810187.2**

(22) Date of filing : **16.03.92**

(51) Int. Cl.[5] : **C08G 65/48,** C08G 65/40, C08L 71/00, C08L 63/00, C08L 79/00, C08L 79/08

(30) Priority : **25.03.91 US 674631**

(43) Date of publication of application : **30.09.92 Bulletin 92/40**

(84) Designated Contracting States : **BE DE ES FR GB IT NL SE**

(71) Applicant : **CIBA-GEIGY AG**
**Klybeckstrasse 141**
**CH-4002 Basel (CH)**

(72) Inventor : **Southcott, Mark Richard, Dr.**
**1204 Greystone Lane**
**Brewster, New York 10509 (US)**

(54) **Imino functional polyethers and their use.**

(57) The present invention relates to imido functional polyethers having recurring units of the formula

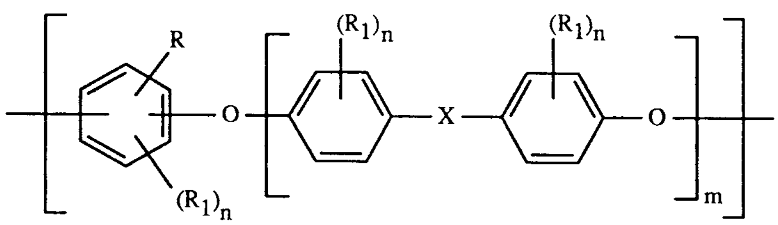

(I)

having a molecular weight of from about 5000 to about 50000 , in which m is an integer of from 1 to 3, X is -O-, -SO- or $-SO_2-$, R is a radical of the formula

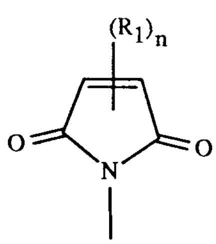

or

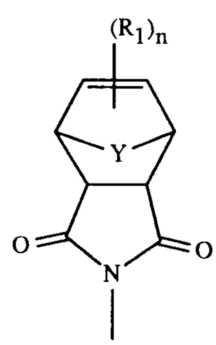

in which Y is $-CH_2-$, $-CH(R_2)-$, $C(R_2)_2-$, or $-CH_2-CH_2-$, and $R_2$ is lower alkyl, $R_1$ independently of another is lower alkyl, lower alkenyl, lower alkoxy, cyano, phenyl, or phenoxy, and n is an integer of from 0 to 2. These polyethers can be used as tougheners for epoxy, bismaleimide and polyimide resin systems.

EP 0 506 611 A2

The present invention relates to novel imino functional polyethers and their use.

Epoxy, bismaleimide and polyimide resin systems are used in different technical fields, for example, as adhesives, coatings or raw materials for stabilization. For certain applications, it is required that these materials exhibit a high degree of toughness with reduced viscosity and impart greater hardness. Accordingly, various tougheners have been used to improve the properties of such materials. A large variety of tougheners of different chemical types are known in the art, e. g. polyether sulphones and thermoplastic polyimides. There is a strong need to provide new tougheners which increase the flexural strength of epoxy, bismaleimide and polyimide resin systems.

The present invention provides imido functional polyethers, resin mixtures containing these polyethers, and as well as a method for toughening resin systems, especially epoxy, bismaleimide and polyimide resin systems. The polymers according to the invention prove to have excellent toughening properties and greatly increase the flexural strength of such resin systems.

The present invention relates to imido functional polyethers having recurring units of the formula

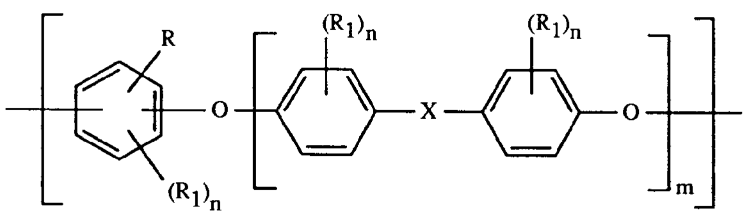

(I)

having a molecular weight of from about 5000 to about 50000, in which
m is an integer of from 1 to 3,
X is -O-, -SO-, or $-SO_2-$,
R is a radical of the formula

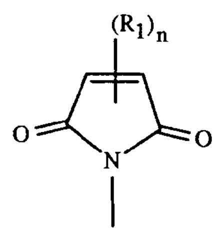

or

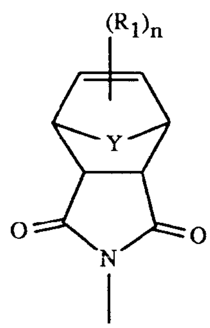

in which
Y is $-CH_2-$, $-CH(R_2)-$, $C(R_2)_2-$, or $-CH_2-CH_2-$, and
$R_2$ is lower alkyl,
$R_1$ independently of another is lower alkyl, lower alkenyl, lower alkoxy, cyano, phenyl, or phenoxy, and
n is an integer of from 0 to 2.

Lower alkyl denotes, for example, $C_1$-$C_7$alkyl and is, for example, methyl, ethyl, propyl, isopropyl, n-butyl, isobutyl, sec-butyl, tert-butyl and furthermore embraces appropriate pentyl, hexyl and heptyl radicals. $C_1$-$C_4$Alkyl is preferred, primarily methyl.

Lower alkenyl denotes, for example, $C_3$-$C_7$alkenyl and is, for example, 2-propenyl or 1-, 2- or 3-butenyl. $C_3$-$C_5$Alkenyl is preferred, primarily 2-propenyl and 2-butenyl.

Lower alkoxy denotes, for example, $C_1$-$C_7$alkoxy and is, for example, methoxy, ethoxy, propoxy, isopropoxy, n-butoxy, isobutoxy and tert-butoxy. $C_1$-$C_4$Alkoxy is preferred, primarily methoxy.

A preferred molecular weight range is from about 15,000 to about 25,000.

The invention especially relates to a polyether having recurring units of the formula

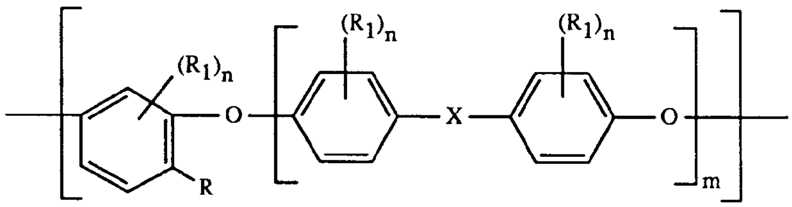

(IA)

in which m is an integer of from 1 to 3, X is -O- or especially $-SO_2-$, R is a radical of the formula

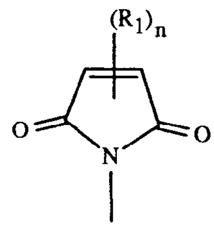

or

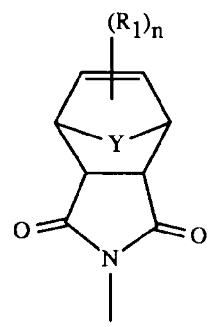

in which Y especially is $-CH_2-$, furthermore $-CH(R_2)-$, $C(R_2)_2-$, or $-CH_2-CH_2-$, and $R_2$ is $C_1$-$C_7$alkyl, $R_1$ independently of another is $C_1$-$C_4$alkyl, especially methyl, $C_3$-$C_4$alkenyl, especially allyl or methallyl, $C_1$-$C_4$alkoxy, especially methoxy, cyano, phenyl, or phenoxy, and n is an integer of from 0 to 2.

A further embodiment of the invention are polyethers having recurring units of the formula (I) or (IA) in which m is an integer of from 1 to 3, X is $-SO_2-$, R is a radical of the formula

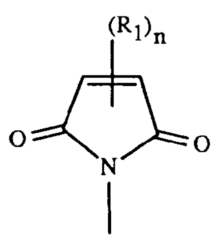

or

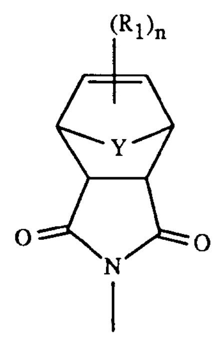

in which Y especially is $-CH_2-$, furthermore $-CH(R_2)-$, and $R_2$ is $C_1$-$C_4$alkyl, especially methyl, $R_1$ independently of another is $C_1$-$C_4$alkyl, especially methyl, or $C_3$-$C_4$alkenyl, especially allyl or methallyl, and n is the integer 1.

Especially preferred are polyethers having recurring units of the formula (I) or (IA)

A) in which m is the integer 1 or 3, X is $-SO_2-$, R is a radical of the formula

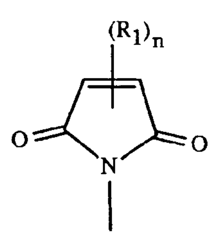

or

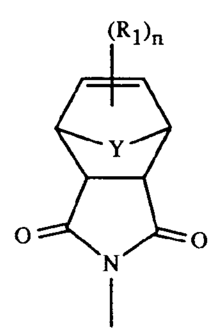

in which Y is $-CH_2-$, $R_1$ is $C_1$-$C_4$alkyl, especially methyl, or $C_3$-$C_4$alkenyl, especially allyl or methallyl, and

n is the integer 1,
and
B) in which m is the integer 1 or 3, X is $-SO_2-$, R is a radical of the formula

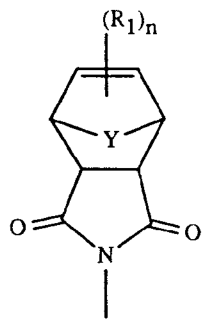

in which Y is $-CH_2-$, $R_1$ is $C_1$-$C_4$alkyl, especially methyl, furthermore $C_3$-$C_4$alkenyl, especially allyl, and n is the integer 0 or 1.

The present invention also relates to mixtures containing (a) a polyether having recurring units of the formula (I) or (IA), respectively, and (b) epoxy, bismaleimide and polyimide resins, as well as to a method for toughening or increasing the flexural strength of epoxy, bismaleimide and polyimide resin systems by the incorporation of said polyethers.

The following are examples of applicable epoxy, bismaleimide and polyimide resin systems:

Epoxy resin systems:

The epoxy resins applicable to the instant invention are those possessing on average more than one vic-epoxy group per molecule, i.e., more than one

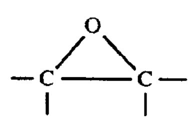

group; which group may be a terminal group, i.e.,

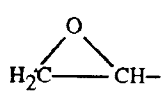

or may be in an internal position.

The polyepoxides may be saturated or unsaturated aliphatic, cycloaliphatic, aromatic or heterocyclic and may be substituted with substituents, such as chlorine, hydroxyl, ether radicals and the like. In general, they may be based on polyhydric phenols such as those based on bisphenol A, F and S, epoxidation products of cresol novolacs or phenol novolacs, hydantoin epoxide resins, polyglycidyl esters, glycidylated aromatic amines, glycidylated aminophenols, and cycloaliphatic epoxy resins.

More specifically, examples of such polyepoxides include, among others, 1,4-bis(2,3-epoxypropoxy)benzene, 1,3-bis(2,3-epoxypropoxy)benzene; 4,4'-bis(2,3-epoxypropoxy)diphenyl ether; 1,8-bis(2,3-epoxypropoxy)octane; 1,4-bis(2,3-epoxypropoxy)cyclohexane; 2,2,-[4,4'-bis(2-hydroxy-3,4-epoxybutoxy)diphenyl]-propane; 1,3-bis(4,5-epoxypentoxy-5-chlorobenzene; 1,4-bis-(3,4-epoxybutoxy)-2-chlorocyclohexane; 1,3-bis-(2-hydroxy-3,4-epoxybutoxy)benzene; 1,4-bis(2-hydroxy-4,5-epoxypentoxy)-benzene.

Other examples include the epoxy polyethers of polyhydric phenols prepared from halogen-containing epoxides or dihalohydrins in the presence of an alkaline medium. Polyhydric phenols that can be used for this purpose include, among others, resorcinol, catechol, hydroquinone, methyl resorcinol or polynuclear phenols, such as 2,2-bis-(4-hydroxyphenol)propane (bisphenol A), 2,2-bis(4-hydroxyphenol)butane, 4,4'-dihydroxybenzophenone, bis-(4-hydroxyphenyl)ethane, 2,2-bis(4-hydroxyphenyl)pentane and 1,5-dihydroxynaphthalene. The halogen

containing epoxides may be further exemplified by 3-chloro-2,3-chloro-1,2-epoxybutane, 3-bromo-1,2-epoxyhexane, 3-chloro-1,2-epoxyoctane, and the like. By varying the ratio of the phenol and epichlorohydrin, one obtains different molecular weight products as shown in U.S. 2,633,458.

A preferred group of the above described epoxy polyethers of polyhydric phenols are glycidyl polyethers of the dihydric phenols. These may be prepared by reacting the required proportions of the dihydric phenol and epichlorohydrin in an alkaline medium. The desired alkalinity is obtained by adding basic substances such as sodium or potassium hydroxide, preferably in stoichiometric excess to the epichlorohydrin. The reaction is preferably accomplished at temperatures within the range of 50°C to 150°C. The heating is continued for several hours to effect the reaction and the product is then washed free of salt and base. The preparation of four suitable glycidyl polyethers of dihydric phenols is illustrated in U.S. 2,633,458 as Polyethers A, B, C and D.

Another group of polyepoxides comprises the polyepoxy polyethers obtained by reacting, preferably in the presence of an acid-acting compound, such as Lewis acids or quaternary halides, or of the aforedescribed halogen-containing epoxides such as epichlorohydrin, with a polyhydric alcohol, and subsequently treating the resulting product with an alkaline component. As used herein the expression "polyhydric alcohol" is meant to include those compounds having at least two free alcoholic OH groups and includes the polyhydric alcohols and their ethers and esters, hydroxy-aldehydes, hydroxy-ketones, halogenated polyhydric alcohols and the like. Polyhydric alcohols that may be used for this purpose may be exemplified by glycerol, ethylene glycol, propylene glycol, diethylene glycol, butylene glycol, hexanetriol, sorbitol, mannitol, pentaerythritol, polyallyl alcohol, polyvinyl alcohol, mesitol, trimethylolpropane, 2,2-[bis(4-hydroxycyclohexyl)]propane and the like. The preparation of suitable polyepoxide polyethers is illustrated in U.S. 2,633,458 as Polyether F.

Particularly preferred members of this group comprise the glycidyl polyethers of aliphatic polyhydric alcohols containing from 2 to 10 carbon atoms and having from 2 to 6 hydroxyl groups and more preferably the alkane polyols containing from 2 to 8 carbon atoms and having from 2 to 6 hydroxyl groups. Such products preferably have an epoxy functionality greater than 1.0, and still more preferably between 1.1 and 4 and a molecular weight between 300 and 1000.

Another group of polyepoxides include the epoxy esters of polybasic acids, such as diglycidyl phthalate and diglycidyl adipate, diglycidyl tetrahydrophthalate, diglycidyl maleate, epoxidized dimethylallyl phthalate and epoxidized dicrotyl phthalate.

Examples of polyepoxides having internal epoxy groups include, among others, the epoxidized esters of polyethylenically unsaturated monocarboxylic acids, such as epoxidized linseed, soybean, perilla, oiticica, tung, walnut and dehydrated castor oil, methyl linoleate, butyl linoleate, ethyl 9,12-octadecadienoate, butyl 9,12,15-octadecatrienoate, ethyl eleostearate, monoglycerides of tung oil fatty acids, monoglycerides of soybean oil, sunflower, tapeseed, hempseed, sardine, cottonseed oil and the like.

Another group of the epoxy-containing materials having internal epoxy groups include the epoxidized esters of unsaturated alcohols having the ethylenic group in an internal position and polycarboxylic acids such, for example, as di-(2,3-epoxybutyl) adipate, di(2,3-epoxybutyl) oxalate, di(2,3-epoxyhexyl) succinate, di(2,3-epoxyoctyl) tetrahydrophthalate, di(4,5-epoxydodecyl) maleate, di(2,3-epoxybutyl) terephthalate, di(2,3-epoxypentyl) thiopropionate, di(2,3-epoxyhexyl) succinate, di(2,3-epoxyoctyl) tetrahydrophthalate, di(4,5-epoxydodecyl) maleate, di(2,3-epoxybutyl) terephthalate, di(2,3-epoxypentyl) thiopropionate, di(2,3-epoxybutyl) citrate and di(4,5-epoxyoctadecyl) malonate, as well as the esters of epoxycyclohexanol and epoxycyclohexylalkanols such, for example, as di(2,3-epoxycyclohexylmethyl) adipate and di(2,3-epoxycyclohexylmethyl) phthalate.

Another group of materials having internal epoxy groups include epoxidized esters of unsaturated alcohols and unsaturated carboxylic acids, such as 2,3-epoxybutyl 3,4-epoxy pentanoate, 3,4-epoxycyclohexyl 3,4-epoxypentanoate, 3,4-epoxycyclohexyl 3,4-cyclohexanone, 2,3-epoxycyclohexylmethyl 2,3-epoxycyclohexanoate, and 3,4-epoxycyclohexyl 4,5-epoxyoctanoate, and the like.

Another group of materials having internal epoxy groups includes epoxidized esters of unsaturated monocarboxylic acids and polyhydric alcohols, such as ethylene glycol di(2,3-epoxycyclohexanoate), glycerol tri(2,3-epoxycyclohexanoate) and pentanediol di(2,3-epoxyoctanonate).

Still another group of the epoxy compounds having internal epoxy groups includes epoxidized derivatives of polyethylenically unsaturated polycarboxylic acids, such as, for example, dimethyl 8,9,11,13-diepoxyeicosanedioate, dibutyl 7,8,11,12-diepoxyoctadecanedioate, dioctyl 10,11-diethyl-8,9,12,13-diepoxyeicosanedioate, dicyclohexyl 3,4,5,6-diepoxycyclohexanedicarboxylate, dibenzyl 1,2,4,5-diepoxycyclohexane- 1,2-di-carboxylate and diethyl 5,6, 10, 11 -diepoxyoctadecylsuccinate.

Especially preferred are aromatic epoxy resins, such as novolak epoxy resins, diglycidyl ethers of bisphenols or tetra glcycidyl compounds of aromatic diamines, preferably N,N,N′,N′-tetraglycidyl-4,4′-diaminophenylmethane.

Bismaleimide resin systems:

The bismaleimides useful in the formulations of this invention may be any of the bismaleimides derived from aromatic and aliphatic diamines, including any of the well-known and widely available phenylene diamines and the various diamino-substituted polynuclear aromatic compounds such as diaminodiphenyl sulfone, diaminobenzophenone, diaminodiphenylether, diaminodiphenylmethane, and the like, as well as the various aryl compounds having a plurality of aminophenylalkylidene or aminophenoxy substituents. Also useful are bismaleimides based on $C_4$-$C_{20}$aliphatic diamines such as the various isomeric alkanes having diamino substituents. The bismaleimides may be employed singly or in mixtures comprising two or more bismaleimides, which may include both aromatic and aliphatic bismaleimides. A great variety of bismaleimides suitable for use as matrix resins are well-known in the art, such as are recited for example in U.S. Patent Nos. 4,644,039, 4,100,140 and 4,654,407.

Preferred bismaleimides include:

N,N′-methylene-bis-maleimide, N,N′-ethylene-bis-maleimide, N,N′-hexamethylene-bis-maleimide, N,N′-m-phenylene-bis-maleimide, N,N′-p-phenylene-bis-maleimide, N,N′-4,4′-diphenylene-bis-maleimide,N,N′-4,4′,3,3′dichloro-diphenylene-bis-maleimide, N,N′-diphenylethan-bis-maleimide, N,N′-4,4′-diphenylsulfone-bis-maleimide, N,N′-p-xylylene-bis-maleimide, N,N′-m-xylylene-bis-maleimide, N,N′-4,4′,2,2′-diphenyl-propane-bis-maleimide, the N,N′-bis-maleimide of the 4,4′-diamino-triphenyl-phosphate, and the N,N′-bis-maleimide of the 4,4′diamino-triphenylthiophosphate.

Especially preferred is the bismaleimide sold by CIBA-GEIGY under the tradename XU292 B.

Polyimide resin systems:

The polyimides are prepared by reacting a polyfunctional diamine with a polyfunctional dianhydride or an ester thereof in an organic reaction medium which is a solvent for at least one of the reactants, preferably under anhydrous conditions under 100°C. The resulting product is a polyamic acid which is then converted to the desired polyimide by one of several methods: heating the polyamic acid solution until imidization is substantially complete; or by combining the polyarnic acid solution and a dehydrating agent, with or without catalyst, and optionally heating the resulting mixture until imidization is substantially complete.

Any polyimide can be used according to the present invention.

The polyimides are derived from diamines and/or dianhydrides and are characterized by a repeating unit have the following structural formula

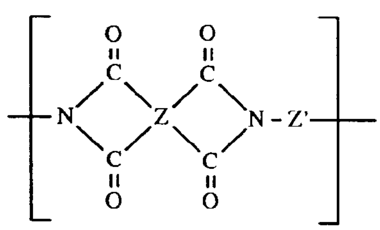

(II)

wherein the four carbonyl groups are attached directly to separate carbon atoms, the carbonyl groups being ortho or peri to each other so that five or six membered imide rings are formed respectively, wherein Z is a tetravalent radical containing at least one aromatic ring, and wherein Z′ is a divalent organic radical selected from aromatic, aliphatic, alkyl aromatic, cycloaliphatic and heterocyclic radicals, combinations of these, and radicals with heteroatom-containing bridging groups where the heteroatom in the bridge is oxygen, sulfur, nitrogen, silicon or phosphorus.

Typical polyimides contain repeating units wherein Z is a phenylindane radical of the formula

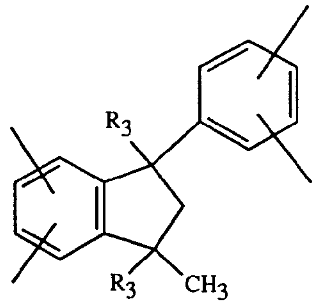

(III)

wherein $R_3$ is hydrogen or an alkyl group of from 1 to 5 carbon atoms, and Z'is a phenylindane radical of the formula

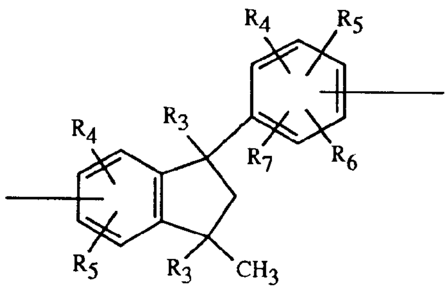

(IV)

wherein $R_3$ is hydrogen or an alkyl group of from 1 to 5 carbon atoms, and $R_4$, $R_5$, $R_6$ and $R_7$ are independently hydrogen, halogen or (lower) alkyl having 1 to 4 carbon atoms.

The phenylindane diamine component of the polyimide can consist of any combination of the isomeric or substituted isomeric diamino compounds represented by formula IV above. For example, the phenylindane diamine component can comprise from 0 to 100 percent of 5-amino-1-(4′-aminophenyl)-1,3,3-trimethylindane in combination with from 100 to 0 percent of 6-amino-1-(4′-aminophenyl)-1,3,3-trimethylindane. Further, either or both of these isomers can be substituted over the entire range from 0 to 100 percent by any of the substituted diamino isomers represented by formula IV. Examples of such substituted diamino isomers are represented by formula IV, specifically 5-amino-6-methyl-1-(3′-amino-4′-methylphenyl)-1,3,3-trimethylindane; 5-amino-1-(4′-amino-Ar′,Ar′-dichlorophenyl)-Ar,Ar-dichloro-1,3,3-trimethylindane; 6-amino-1 -(4′-amino-Ar′,Ar′-dichlorophenyl)-Ar,Ar-dichloro-1,3,3-trimethylindane;4-amino-6-methyl-1-(3′-amino-4′-methyl-phenyl)-1,3,3-trimethyl indane and Ar-amino-1-(Ar′-amino-2′,4-dimethylphenyl)-1,3,3,4,6-pentamethylindane. The prefixes Ar and Ar′ in the above formulas indicate indefinite positions for the given substituents in the phenyl rings.

Preferred polyfunctional diamines e.g. include aliphatic acid aromatic diamines containing at least one benzene ring and preferably two benzene rings. The aliphatic amines may have 5 to 22 carbon atoms per molecule as illustrated below:
2,5-dimethylhexamethylene diamine; 2,5-dimethylheptamethylene diamine; 5-methylnonamethylene diamine; 2,17-diamino-eicosadecane; 1,4-diamino-cyclohexane; 1,10-diamino-1,10-dimethyldecane; 1,12-diamino-octadecane; para-phenylenediamine; metaphenylenediamine; 4,4′-diamino-diphenylpropane; 4,4′-diamino-diphenylmethane; benzidine; 4,4′-diamino-diphenyl sulfide; 4,4′-diamino-diphenyl sulfone; 3,3′-diaminodiphenyl sulfone; 4,4′-diamino-diphenyl ether, 1,5-diamino-naphthalene; 3,3′-dimethoxy benzidine; 2,4-bis(beta-amino-t-butyl)toluene; bis-(para-beta-amino-t-butylphenyl)ether, bis-(para-beta-methyl-delta-amino-pentyl)benzene; bis-(para-1,1-dimethyl-5-aminopentyl)benzene; 1-isopropyl-2,4-metaphenylene diamine; m-xylylene diamine; hexamethylene diamine; heptamethylene diamine; octamethylene diamine; nonamethylene diamine; decamethylene diamine; diamino-propyl tetramethylene diamine; 3-methylheptamethylene diamine; 4,4′-dimethylheptamethylene diamine; 2,11 -diamino-dodecane; 1,2-bis(3-aminopropoxy)-ethane; 2,2-dimethyl propylene diamine; 3-methoxy-hexamethylylene diamine; 3,3′-dimethyl benzidine etc. and triamines such as 1,3,5-triaminobenzene; 2,4,6-triamino-s-triazine; 1,2,3-triaminopropane; 4,4′,4″-triaminotriphenylmethane; 4,4′,4″-triaminotriphenylcarbinol.

As the preferred aromatic diamines, there may be mentioned $C_6$-$C_{10}$arylene diamines such as p-phenylenediamine, m-phenylenediamine and m-xylylenediamine, bis(p-aminophenyl) methane, N,N,N′,N′-tetramethyl-4,4′-diaminodiphenylmethane, and the like.

The polyfunctional anhydrides and esters thereof correspond to the formulae

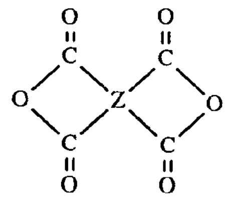

and

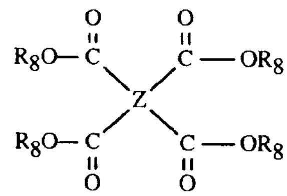

wherein Z is a tetravalent aryl radical, and $R_8$ is hydrogen or$C_1$-$C_6$alkyl, with at least two $R_8$ groups being alkyl.

The aryl radical may, for example, be substituted or unsubstituted phenyl, naphthyl or biphenyl rings or two phenyl rings linked by O, S, $SO_2$, carbonyl, carboxy or alkylene, or aryl rings containing heterocyclic atoms such as pyrazine or thiophene.

The following species are typical of tetracarboxylic acid dianhydrides suitable for practicing the invention: 2,3,9,10-perylene tetracarboxylic acid dianhydride; 1,4,5,9-naphthalene tetracarboxylic acid dianhydride; 2,6-dichloronaphthalene-1,4,5,8-tetracarboxylic acid dianhydride; 2,7-dichloronaphthalene-1,4,5,8-tetracarboxylic acid dianhydride; 2,3,6,7-tetrachloronaphthalene-1,4,5,8-tetracarboxylic acid dianhydride; phenanthrene-1,8,9,10-tetracarboxylic acid dianhydride; 2,3,3′,4′-benzophenonetetracarboxylic acid dianhydride; 3,3′,4,4′-benzophenonetetracarboxylic acid dianhydride; 2,2′,3,3′-benzophenonetetracarboxylic acid dianhydride; 3,3′,4,4′-biphenyltetracarboxylic acid dianhydride; 2,2′,3,3′-biphenyltetracarboxylic acid dianhydride; 4,4′-isopropylidenediphthalic anhydride; 3,3′-isopropylidenediphthalic anhydride; 4,4′-oxydiphthalic anydride; 4,4′-sulfonyldiphthalic anhydride; 3,3′-oxydiphthalic anhydride; 4,4′-methylenediphthalic anhydride; 4,4′-thiodiphthalic anhydride; 4,4′-ethylidenediphthalic anhydride; 2,3,6,7-naphthalenetetracarboxylic acid dianhydride; 1,2,4,5-naphthalenetetracarboxylic acid dianhydride; 1,2,5,6-naphthalenetetracarboxylic acid dianhydride; benzene-1,2,3,4-tetracarboxylic acid dianhydride; pyrazine-2,3,5,6-tetracarboxylic acid dianhydride; thiophene-2,3,4,5-tetracarboxylic acid dianhydride, and the indicated esters thereof.

Such anhydrides and esters and methods for their preparation are disclosed in U.S. 3,745,149 and U.S. 3,856,752, such teachings being fully incorporated herein.

The imido functional polyethers according to the present invention can be prepared by reacting an amine of the formula

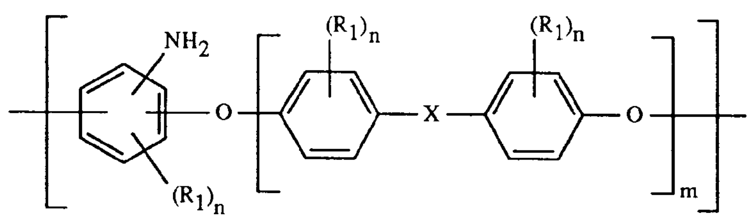

(Va)

with a dicarboxylic acid of the formula

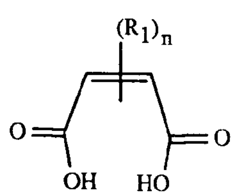

(Vb) or

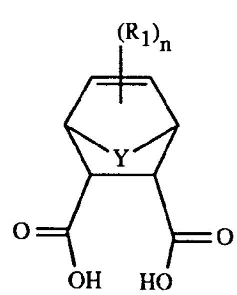

(Vc),

respectively, or a reactive derivative thereof, such as an anhydride or an activated ester thereof. The reaction is conducted in the presence of a base at elevated temperatures, e.g. ranging from 100 to 250°C.

Especially preferred are cyclic anhydrides of compounds of the formulae (Vb) or (Vc), respectively.

The starting material of the formula (Va) can be manufactured , for example, by reacting a compound of

the formula

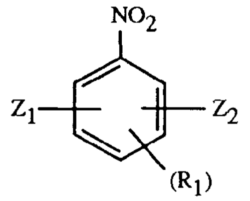

(Vd)

with a compound of the formula

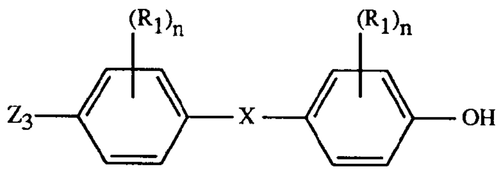

(Ve)

in which $Z_1$ is reactive esterified hydroxyl and one of the variables $Z_2$ and $Z_3$ is hydroxyl and the other is reactive esterified hydroxyl. In the next reaction step, the nitro group is reduced to amino using conventional reduction methods, for example, by catalytic hydrogenation.

Reactive esterified hydroxyl, is, in particular, hydroxyl which is esterified with a strong inorganic acid or organic sulfonic acid, for example halogen such as chlorine, bromine or iodine, sulfonyloxy such as methane- or trifluoromethanesulfonyloxy, p-bromobenzene- or p-toluenesulfonyloxy. Preferred is halogeno, especially chlorine.

Suitable bases are, for example, alkali metal hydroxides, hydrides, amides, alkanolates, or carbonates. Examples which may be mentioned are sodium hydroxide, sodium hydride, sodium amide, sodium (m)ethoxide, potassium tert-butoxide, and potassium carbonate.

Preferably, $Z_1$ and $Z_2$ each represent halogeno, especially chlorine, and $Z_3$ is hydroxyl.

The starting materials corresponding to the formulae (Vd) and (Ve) are known or can be manufatured in a mannner known per se, respectively.

Epoxy, bismaleimide and polyimide resin systems such as those described above, exhibiting a high degree of toughness and an increased flexural strength, can be used in different technical fields, for example, in composites, printed circuit boards, castings, molding compounds, especially adhesives, coatings or raw materials for stabilization. In view of the improved performance characteristics, the application of greatest interest is in high performance composite applications, pertinent, for example, to the aerospace industry, where a high degree of toughness with reduced viscosity and greater hardness is required. Thus, the modified resins according to the present invention are utilized to pre-impregnate various fibers for eventual use as honeycomb skins and structural parts. Techniques for preparing prepregs are well known to those skilled in the art. In terms of honeycomb skins and structural parts, graphite, glass, Kevlar reinforced skins and parts as well as others, can be readily prepared from the instant system. Correspondingly, techniques for preparing laminates are well known. Such laminates may be prepared by compression or autoclave molding and may comprise a broad range of thicknesses.

The following examples further illustrate the embodiments of the invention.

Example 1: Preparation of Poly[oxy-1,5-(4-aminophenylene)oxy-1,4-phenylenesulphonyl-1,4-phenylene]

To 4,4-dihydroxydiphenylsulphone (200 g, 0.8 M) is added 2,4-dichloronitrobenzene (153.4 g, 0.8 M), anhydrous potassium carbonate (112 g, 0.8 M), toluene (800 ml) and 1-methyl-2-pyrrolidinone (1600 ml). The mixture is heated to 145°C and water is removed using a Dean and Stark apparatus. The temperature is then raised to 190°C and the toluene is removed; the mixture being stirred at this temperature for 5 hours. After cooling to 100°C the product is filtered. The filtrate is catalytically hydrogenated using palladium on carbon (5%, 20 g) and filtered to give a solution of the title polymer in 1-methyl-2-pyrrolidinone. A small aliquot (5.00 ml) is precipitated onto methanol (50 ml), filtered and dried in a vacuum oven at 100°C. Gel permeation chromatography shows a peak with identical retention time to commercial polyethersulphone (ICI Victrex) which is known to have a molecular weight of approximately 20,000 {dilution, 1%; eluent, DMF; R.I. 280 nm}. IR (KBr disc): 3340 $cm^{-1}$ ($OH/NH_2$); 1670-1620 $cm^{-1}$ (O=S=O). NMR (DMSO-d6): 7.1-8.3 (m-ArH); having following re-

curring unit:

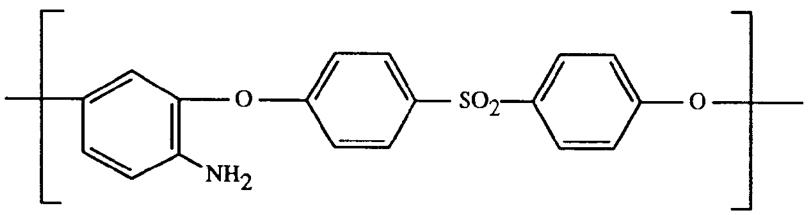

Example 2: Preparation of Poly[oxy-1,5-(4-aminophenylene)oxy-1,4-phenylenesulphonyl-1,4-phenyleneoxy-1,4-phenylenesulphonyl-1,4-phenyleneoxy-1,4-phenylenesulphonyl-1,4-phenylene]

To bis(4-chlorophenyl)sulphone (114.8 g, 0.4 M) is added 4,4′-sulphonyldiphenol (200 g, 0.8 M), anhydrous potassium carbonate (111 g, 0.804 M), 1-methyl-2-pyrrolidinone (1600 ml) and toluene (800 ml). The mixture is stirred and heated to 135°C. Water is removed using a Dean and Stark apparatus. The solution is cooled to 100°C and 2,4-dichloronitrobenzene (76.8 g, 0.4 M) is added. Additional water is then removed. The reaction is heated at 190°C for 5 hours, whereupon the solution is catalytically hydrogenated using palladium on carbon (20 g, 5%). A small aliquot (5.00 ml) is precipitated onto stirring methanol, filtered and dried in a vacuum oven at 100°C overnight. IR (KBr disc): 3400 $cm^{-1}$ (small $OH/NH_2$): 1670 $cm^{-1}$ (O=S=O). NMR (DMSO-d6): 3.4 (s-2H); 6.9-8.0 (m-27) having following recurring unit:

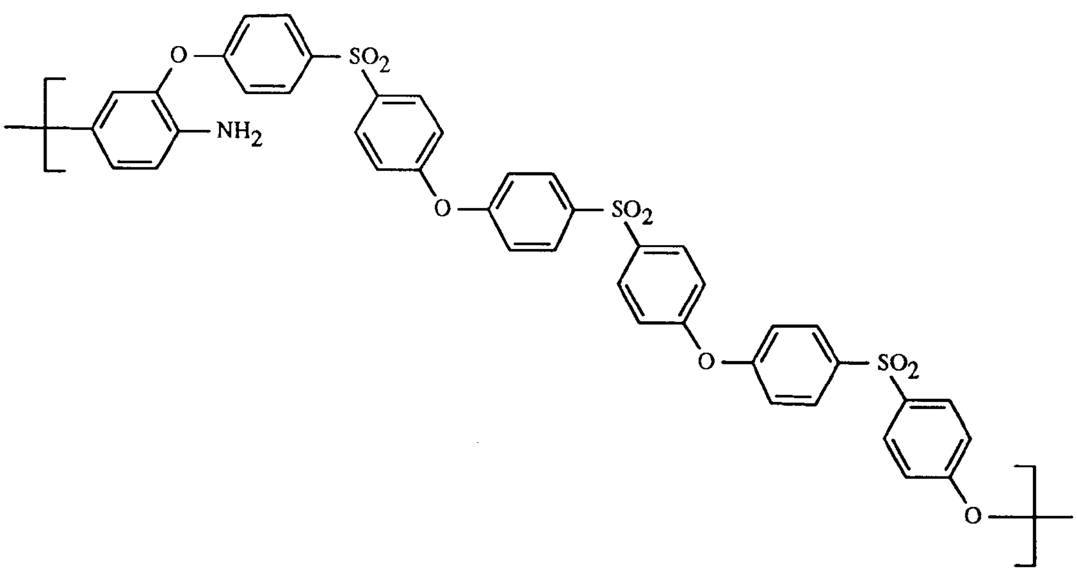

Example 3: Preparation of Poly[oxy-1,5-(4-maleimidophenylene)oxy-1,4-phenylenesulphonyl-1,4-phenylene]

A small aliquot of the solution of the polymer described in Example 1, is analyzed by NMR and reanalyzed after a $D_2O$ shake. This information is used to calculate the amount of amine group present in the polymer. Coupled with the weight/ml data, the amount of amine/ml of solution is calculated.

To the solution of the polymer from Example 1 is added the required amount of maleic anhydride (1 mole/mole of amine) and molecular sieves (3Å, 200 g). The mixture is stirred at 150°C for 24 hours. The solution is precipitated into stirring methanol, filtered and dried in a vacuum oven at 100°C overnight. The powder is ground to a particle size of 20 microns. IR (KBr disc): 3400 $cm^{-1}$ (small OH); 1710 and 1720 $cm^{-1}$ (C=O imide); 1650 $cm^{-1}$ (O=S=O). NMR: 1.8-2.3 (m-6H); 6.5-8.0 (m-13H) having following recurring unit:

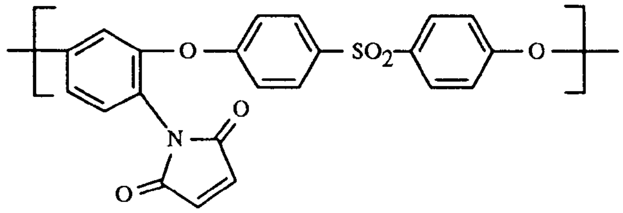

Example 4: Preparation of Poly[oxy-1,5-{4-(1,3,3a,4,7,7a-hexahydro-1,3-dioxo-4,7-methano-2H-isoindol-2-yl)phenylene }oxy-1,4-phenylenesulphonyl-1,4-phenylene]

To the solution of the polymer from Example 1 is added the required amount of bicyclo-[2.2.1]hept-5-ene-2,3-dicarboxylic anhydride (1 mol/mole of amine) and molecular sieves (3Å, 200 g). The mixture is stirred and heared at 150°C for 3 hours. After cooling and filtration the solution is precipitated slowly onto stirring methanol, dried in a vacuum oven at 100°C overnight and ground to a particle size of 20 microns. IR (KBr disc); 3400 $cm^{-1}$ (small OH); 1710 and 1780 $cm^{-1}$ (C=O imide); 1650 $cm^{-1}$ (O=S=O). NMR: 1.8-2.3 (m-6H); 6.5-8.0 (m-13H); having following recurring unit:

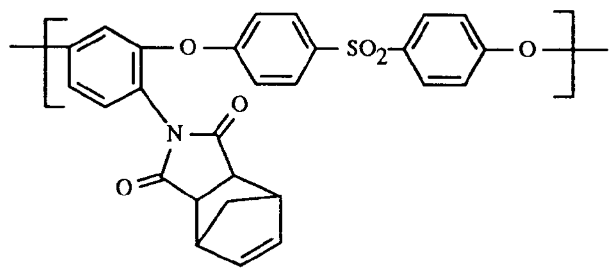

Example 5: Preparation of Poly[oxy-1,5-{4-(1,3,3a,4,7,7a-hexahydro-1,3-dioxo-4,7-methano-5(6)-methyl-2H-isoindo-2-yl)phenylene}oxy-1,4-phenylenesulphonyl-1,4-phenylene]

To the solution of the polymer from Example 1 is added the required amount of bicyclo-[2.2.1]hept-5-ene-5(6)-methyl-2,3-dicarboxylic anhydride (1 mole/mole of amine) and molecular sieves (3Å, 200 g), with the mixture being stirred and heated at 150°C for three hours. After cooling and filtration, the solution is precipitated slowly onto stirring methanol. The product is filtered, washed with methanol, dried in a vacuum oven at 100°C overnight and ground to a particle size of 20 microns. IR (KBr disc): 3400 $cm^{-1}$ (small OH); 1710 and 1780 cm-1 (C=O imide); 1660 $cm^{-1}$ (O=S=O). NMR: 1.8-2.2 (m-4H); 2.65 (s-3H); 3.3 (s-2H); 7.0-8.0 (m-11H).

Example 6: Preparabon of Poly[oxy-1,5-{4-(1,3,3a,4,7,7a-hexahydro-1,3-dioxo-4,7-methano-5(6)-(prop-2-ene)-2H-isoindo-2-yl)phenylene}oxy-1,4-phenylenesulphonyl-1,4-phenylene]

To the solution of the polymer from Example 1 is added the required amount of bicyclo[2.2. 1]hept-5-ene-5(6)-(prop-2-ene)-2,3-dicarboxylic anhydride (1 mole/mole amine) and molecular sieves (3Å, 200 g). The mixture is stirred and heated at 150°C for 3 hows. After cooling and filtration the solution is precipitated slowly onto stirring methanol, dried in a vacuum oven at 100°C overnight and ground to a particle size of 20 microns. IR (KBr disc): 3400 $cm^{-1}$ (small OH); 1710 and 1780 $cm^{-1}$ (C=O imide); 1660 $cm^{-1}$ (O=S=O). NMR: 1.8-2.2 (m-4H); 2.8 (s-2H); 3.2 (s-2H); 5.0 (s-1H); 5.8 (s-2H); 6.8 (s-1H); 6.8-8.2 (m-11H).

Example 7: Preparation of Poly[oxy-1,5-{4-(1,3,3a,4,7,7a-hexahydro-1,3-dioxo-4,7-methano-2H-isoindl-2-yl)phenylene}oxy-1,4-phenylenesulphonyl-1,4-phenyleneoxy-1,4-phenylenesulphonyl-1,4-phenyleneoxy-1,4-phenylenesulphonyl-1,4-phenylene]

A small aliquot of the solution of the polymer, described in Example 2, is analysed by NMR and reanalysed after a $D_2O$ shake. This information is used to calculate the amount of amine group present in the polymer. Coupled with the weight/ml data, the amount of amine/ml of solution is calculated.

To the solution of the polymer from Example 2 is added the required amount of bicyclo-[2.2.1]hept-5-ene-2,3-dicarboxylic anhydride (1 mole/mole of amine) and molecular sieves (3Å, 200 g). The mixture is stirred and heated at 150°C for 3 hours. After cooling and filtration the solution is precipitated slowly onto stirring methanol, dried in a vacuum oven at 100°C overnight and ground to a particle size of 20 microns. IR (KBr disc): 3400 $cm^{-1}$ (small OH); 1710 and 1780 $cm^{-1}$ (C=O imide); 1670 $cm^{-1}$ (O=S=O). NMR (DMSO-d6): 1.8-2.3 (m-6H); 6.6-8.0 (m-29H); having following recurring unit:

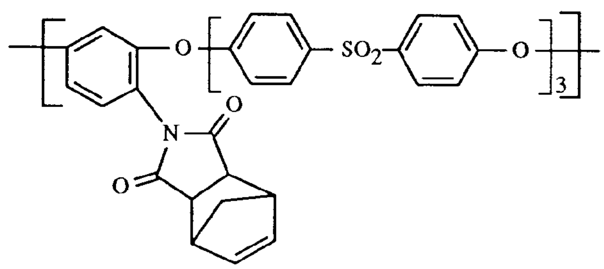

Utility of Invention

The imido functional polymers described in Examples 3 to 7 have been evaluated as tougheners for bismaleimide and polyimide matrix systems. A typical evaluation experiment is shown below.

The bismaleide sold by CIBA-GEIGY under the tradename XU292B (200.3 g) is mixed with the polymer cited in Example 3 (24.6 g) and heated at 140°C for 1 hour. After cooling to 120°C, the diphenol (267 g) is added. The mixture is stirred for 10 mins and then cooled to 100°C. Hardener HY932 (5.1 g) and PS802 (2.5 g) are added and the mixture stirred thoroughly. The resin is coated onto carbon fibre (G815, 8 plies) giving a prepreg with 46% wet resin content (by weight). The prepreg is cured in an autoclave (4 hours at 175°C) and post-cured in an oven for 8 hours at 245°C. The laminate shows the following properties:

Tg (glass transition temperature) by Dynamic Mechanic Thermal Analysis (DMTA) = 247°C

$G_{1c}$ = 3.95 in/lb $in^2$ [ASTM: E 813 used as standard test method]

End-notched Flexural Strength = 5.32 in/lb $in^2$. [ASTM: D 747 used as standard test method].

**Claims**

1. An imido functional polyether having recurring units of the formula

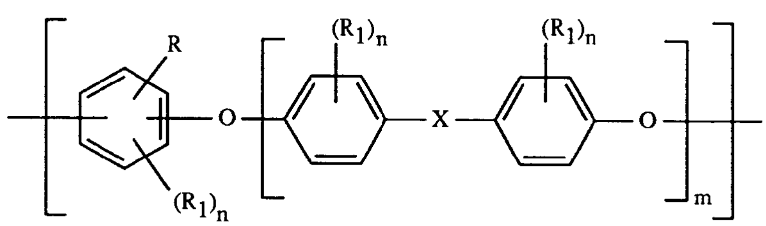

(I)

having a molecular weight of from about 5000 to about 50000, in which
m is an integer of from 1 to 3,
X is -O-, -SO-, or $-SO_2-$,
R is a radical of the formula

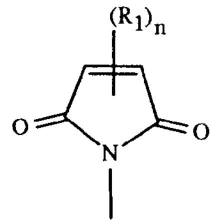

or

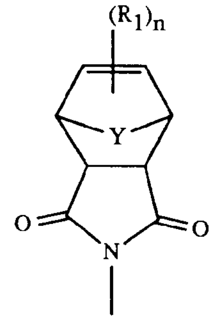

in which
Y is $-CH_2-$, $-CH(R_2)-$, $C(R_2)_2-$, or $-CH_2-CH_2-$, and
$R_2$ is lower alkyl,
$R_1$ independently of another is lower alkyl, lower alkenyl, lower alkoxy, cyano, phenyl, or phenoxy, and
n is an integer of from 0 to 2.

**2.** A polyether according to claim 1 having recurring units of the formula

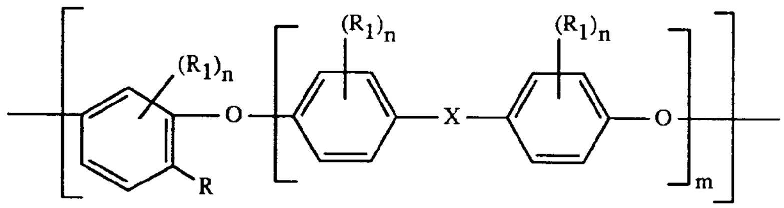

(IA)

in which m is an integer of from 1 to 3, X is -O- or $-SO_2-$, R is a radical of the formula

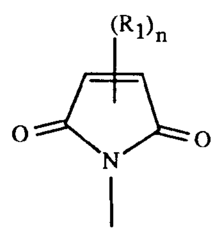

or

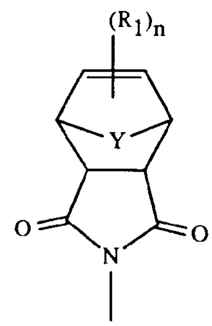

in which Y is $-CH_2-$, $-CH(R_2)-$, $C(R_2)_2-$ or $-CH_2-CH_2-$, and $R_2$ is $C_1$-$C_7$alkyl, $R_1$ independently of another is $C_1$-$C_4$alkyl, $C_3$-$C_4$alkenyl, $C_1$-$C_4$alkoxy, cyano, phenyl, or phenoxy, and n is an integer of from 0 to 2.

**3.** A polyether according to claim 1 having recurring units of the formula (I) or (IA) in which m is an integer of from 1 to 3, X is $-SO_2-$, R is a radical of the formula

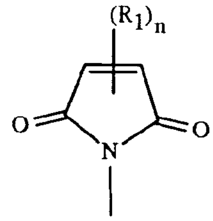

or

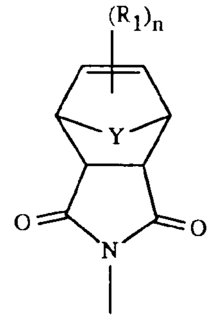

in which Y is $-CH_2-$ or $-CH(R_2)-$, and $R_2$ is $C_1$-$C_4$alkyl, $R_1$ independently of another is $C_1$-$C_4$alkyl or $C_3$-$C_4$alkenyl, and n is the integer 1.

4. A polyether according to claim 1 having recurring units of the formula (I) or (IA) in which m is the integer 1 or 3, X is $-SO_2-$, R is a radical of the formula

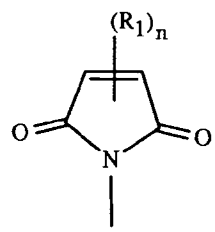

or

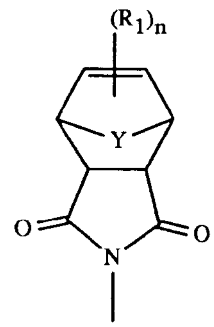

in which Y is $-CH_2-$, $R_1$ is $C_1$-$C_4$alkyl or $C_3$-$C_4$alkenyl, and n is the integer 1.

5. A polyether according to claim 1 having recurring units of the formula (I) or (IA) in which m is the integer 1 or 3, X is $-SO_2-$, R is a radical of the formula

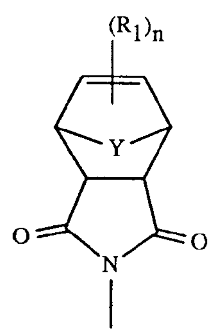

in which Y is $-CH_2-$, $R_1$ is $C_1$-$C_4$alkyl or $C_3$-$C_4$alkenyl, and n is the integer 0 or 1.

6. A polyether according to claim 1 in which the molecular weight range is from about 15,000 to about 25,000.

7. Poly[oxy-1,5-(4-maleimidophenylene)oxy-1,4-phenylenesulphonyl-1,4-phenylene] according to claim 1.

8. Poly[oxy-1,5-{4-(1,3,3a,4,7,7a-hexahydro-1,3-dioxo-4,7-methano-2H-isoindol-2-yl)-phenylene}oxy-1,4-phenylenesulphonyl-1,4-phenylene] according to claim 1.

9. Poly[oxy-1,5-{4-(1,3,3a,4,7,7a-hexahydro-1,3-dioxo-4,7-methano-5(6)-methyl-2H-isoindo-2-yl)phenylene}oxy-1,4-phenylenesulphonyl-1,4-phenylene] according to claim 1.

10. Poly[oxy-1,5-{4-(1,3,3a,4,7,7a-hexahydro-1,3-dioxo-4,7-methano-5(6)-(prop-2-ene)-2H-isoindo-2-yl)phenylene}oxy-1;4-phenylenesulphonyl-1,4-phenylene] according to claim 1.

11. Poly[oxy-1,5-{4-(1,3,3a,4,7,7a-hexahydro-1,3-dioxo-4,7-methano-2H-isoindo-2-yl)-phenylene}oxy-1,4-phenylenesulphonyl-1,4-phenyleneoxy-1,4-phenylenesulphonyl-1,4-phenyleneoxy-1,4-phenylenesulphonyl-1,4-phenylene] according to claim 1.

12. A mixture comprising
(a) an effective toughening amount of an imido functional polyether according to claim 1 and
(b) an epoxy, bismaleimide or polyimide resin system.

13. A method for toughening epoxy, bismaleimide or polyimide resin systems comprising incorporating an effective toughening amount of an imido functional polyether according to claim 1 into said resin systems.

14. A method for increasing the flexural strength of epoxy, bismaleimide or polyimide resin systems comprising incorporating an effective flexural strength increasing amount of an imido functional polyether according to claim 1 into said resin systems.